# EUROPÄISCHE PATENTSCHRIFT

(11) **EP 2 861 966 B1**
(45) Veröffentlichungstag und Bekanntmachung des Hinweises auf die Patenterteilung: **12.10.2022**
(21) Anmeldenummer: 13730809.4
(22) Anmeldetag: 18.06.2013
(51) Int. Cl.: G01N 21/47, G01B 11/02, G01B 11/30

(54) **VERFAHREN ZUM OPTISCHEN VERMESSEN VON PYRAMIDEN AUF TEXTURIERTEN MONOKRISTALLINEN SILIZUMWAFERN**
METHOD FOR THE OPTICAL MEASUREMENT OF PYRAMIDS ON TEXTURED MONOCRYSTALLINE SILICON WAFERS
PROCÉDÉ DE MESURE OPTIQUE DE PYRAMIDES SUR UNE PLAQUETTE DE SILICIUM MONOCRYSTALLINE TEXTURÉE

(30) Priorität: 19.06.2012 DE 102012012156
(43) Veröffentlichungstag der Anmeldung: 22.04.2015
(73) Patentinhaber: Audiodev GmbH, 52525 Heinsberg (DE)
(72) Erfinder: KUBITZEK, Rüdiger, 52511 Geilenkirchen (DE)
(74) Vertreter: Carstens, Dirk Wilhelm
(86) Internationale Anmeldenummer: PCT/EP2013/001795
(87) Internationale Veröffentlichungsnummer: WO 2013/189592

(56) Entgegenhaltungen:
- EP-B1- 1 692 458
- DE-A1-102010 011 056
- DE-A1-102010 029 133
- US-A1- 2006 268 283
- Y. YANG ET AL: "Characterization of 2-D reflection pattern from textured front surfaces of silicon solar cells", SOLAR ENERGY MATERIALS AND SOLAR CELLS, Bd. 115, 18. April 2013 (2013-04-18), Seiten 42-51, XP055079920, ISSN: 0927-0248, DOI: 10.1016/j.solmat.2013.03.026

## Beschreibung

Die Erfindung betrifft ein Verfahren zum optischen Vermessen von Pyramiden auf texturierten monokristallinen Siliziumwafern unter Verwendung von wenigstens einer Lichtquelle und wenigstens einem Lichtempfänger.

Optische Messverfahren zur Messung der Durchschnitts-Pyramidengröße von Pyramiden auf texturierten Oberflächen sind beispielsweise aus der Patentschrift EP1692458B1 bekannt. Dieses Verfahren hat jedoch den Nachteil, dass lediglich eine mittlere Pyramidengröße ermittelt werden kann. Außerdem handelt es sich hierbei um ein indirektes Verfahren, bei dem aus der Intensität eines reflektierten Lichtstrahls auf die Pyramidengröße geschlossen wird. Durch das Auftreten von Beugungseffekten und Abschattungseffekte durch die Pyramiden ist dieses Verfahren darüber hinaus nichtlinear und liefert daher eher Informationen über relative Schwankungen der Durchschnitts-Pyramidengrößen und keine absoluten Mengenergebnisse. Nachteilig ist bei diesem Verfahren weiterhin, dass das rückreflektierte Signal hauptsächlich durch Reflexion an den Pyramidenflächen entsteht.

Aus der Druckschrift DE 10 2010 029 133 A1 ist ein Verfahren zur Charakterisierung von pyramidalen Oberflächenstrukturen auf einem Substrat bekannt. Es enthält die Verfahrensschritte Beaufschlagen der Substratoberfläche mit insbesondere Laserlicht, Erfassen eines durch die Substratoberfläche erzeugten Reflexionsmusters des Lichtstrahles, Auswertung des Reflexionsmusters mit einer Intensitätsbestimmung mindestens eines durch Seitenflanken der pyramidalen Oberflächenstrukturen erzeugten gerichteten pyramidalen Reflexionsmaximums, eines durch Kanten der pyramidalen Oberflächenstrukturen erzeugten diffusen Reflexionsbandes und eines durch ebene Fehlstellen erzeugten Fehlstellenmaximums.

Die Druckschrift US 2006/0268283 A1 beschreibt ein optisches Verfahren zur Bestimmung des Texturierungsgrads durch Quantifizierung von optischen Reflektionsmustern.

Aus der DE 10 2010 011 056 A1 ist ein Verfahren zur quantitativen, optischen Messung der Oberflächenstruktur unter Nutzung der direkten Reflektion an einer oder zwei Facetten bekannt.

Aus dem Aufsatz H. Mäckel, u. a.: CHARACTERISATION OF MONOCRYSTALLINE SILICON TEXTURE USING OPTICAL REFLECTANCE PAT-TERNS, 23rd EUPVSEC, Valencia, Spain, 1 bis 5 September 2008, S. 1160 - 1163 ist ein Verfahren zur Charakterisierung monokristalliner Siliziumwafer-Texturen unter Verwendung optischer Reflektionsmuster bekannt.

Der vorliegenden Erfindung liegt der Aufgabe zugrunde, ein Verfahren anzugeben, mit dem es nicht nur möglich ist, die Durchschnitts-Pyramidengröße zu bestimmen, sondern auch die Verteilungsbreite der Pyramidengrößen, den durchschnittlichen Pyramidenwinkel sowie das Maß der Oberflächenbedeckung auf den Siliziumwafer-Oberflächen.

Diese und weitere Aufgaben der Erfindung werden mit einem Verfahren gemäß Anspruch 1 gelöst. Vorteilhafte Ausführungsformen des erfindungsgemäßen Verfahrens sind in den Unteransprüchen 2 bis 9 angegeben.

Ausgehend von dem eingangs genannten Verfahren werden diese und weitere Aufgaben erfindungsgemäß mit einem Verfahren nach Anspruch 1 gelöst. Das an den Pyramiden gebeugte Licht wird zur Ermittlung von geometrischen Eigenschaften der Pyramiden aufgenommen. Das erfindungsgemäße Verfahren zur Ermittlung von Pyramideneigenschaften und -Geometrien, insbesondere der mittleren Pyramidengröße, der statistischen Verteilungsbreite der Pyramidengröße innerhalb eines beleuchteten Messflecks und/oder des mittleren Pyramidenwinkels, beruht also auf der Auswertung von Beugungsbildern, die durch Beugung an den Pyramiden entstehen. Hierfür wird die einfache Theorie der Beugung am Spalt angewandt.

Gemäß einer vorteilhaften Ausführungsform der Erfindung gemäß Unteranspruch 2 beleuchtet ein Messfleck des von der Lichtquelle emittieren Lichts die Waferoberfläche, und das an der Oberfläche vorwärts gestreute Licht wird vom Lichtempfänger aufgenommen und aus der ermittelten Lichtmenge die Oberflächenbedeckung der Pyramiden ermittelt. Zusätzlich zum zurückgebeugten Licht wird also das vorwärtsgestreute Licht mit einem gegebenenfalls weiteren Lichtempfänger gemessen und ausgewertet. Unter Vorwärtsstreuung ist dabei die Richtung des Lichts zu verstehen, bei der die Waferoberfläche als spiegelnde Fläche angenommen wird. In dieser Richtung ist die gestreute Lichtmenge maximal, wenn der Wafer noch nicht texturiert ist. Dies ist beispielsweise ein sägerauher Wafer in der Solarindustrie. Mit zunehmender Bedeckung des Wafers mit Pyramiden während des Texturierungsprozesses nimmt die in diese Richtung gestreute Lichtmenge proportional zum bedeckten Prozentsatz des Wafers ab. Die mit Pyramiden bedeckten Flächenbereiche liefern aufgrund der geometrischen Orientierung der Pyramidenflächen und -Kanten relativ zu Lichtquelle und Lichtempfänger nahezu kein gestreutes oder reflektiertes Licht in den Lichtempfänger. Bei vollkommener Bedeckung der Oberfläche mit Pyramiden wird in die Vorwärtsrichtung also kein oder nahezu kein Licht reflektiert oder gestreut. Andersherum bedeutet dies: Das in Richtung des Spiegelreflexes reflektierte oder gestreute Licht ist proportional zum nicht mit Pyramiden bedeckten Prozentsatz der Oberfläche.

Gemäß einem Ausführungsbeispiel der Erfindung beleuchtet der Messfleck des von der Lichtquelle emittierten Lichts eine der üblicherweise vier Kanten der Pyramiden, und die Winkelverteilung des an den Kanten zurückgebeugten Lichts wird vom Lichtempfänger winkelaufgelöst aufgenommen. Dies ist deshalb möglich und vorteilhaft, weil die Pyramiden auf der texturierten Oberfläche monokristalline Siliziumwafer aufgrund der Kristallstruktur des Mono-Kristalls alle im Wesentlichen die gleiche Orientierung und im Wesentlichen den gleichen Pyramidenwinkel aufweisen.

Eine vorteilhafte Ausführungsform des erfindungsgemäßen Verfahrens besteht darin, dass die optische Achse der Lichtquelle und des Lichtempfängers mit der Flächennormalen der Waferoberfläche in einer Ebene liegen. Erfindungsgemäß weicht die optische Achse der Lichtquelle winkelmäßig höchstens 10° von einer durch zwei gegenüberliegende Kanten jeder Pyramide aufgespannten Ebene ab. Vorzugsweise weicht auch die optische Achse des wenigstens einen Lichtempfängers winkelmäßig höchstens 10° von dieser Ebene ab.

Diese relativ große Freiheit bei der Anordnung von Lichtquelle und Lichtempfänger hinsichtlich der Abweichung von der durch die Pyramidenkanten aufgespannten Ebene ist deshalb möglich, weil die Pyramidenkanten sehr scharf sind und eine sehr geringe Breite haben, die wesentlich kleiner als die Wellenlänge des verwendeten Lichts ist. Das Beugungsbild ist daher auch in senkrechter Richtung zumindest in einem Bereich von +/- 10° nahezu konstant, so dass die Messergebnisse zumindest in diesem Winkelbereich ebenfalls konstant sind.

Dennoch ist es insbesondere für eine einfache Messanordnung vorteilhaft, wenn die optische Achse der Lichtquelle und/oder des Lichtempfängers im Wesentlichen in der durch die beiden gegenüberliegenden Kanten jeder Pyramide aufgespannten Ebene liegt.

Eine besonders vorteilhafte Ausführungsform der vorliegenden Erfindung besteht darin, dass die optischen Achsen der wenigstens einen Lichtquelle und des wenigstens einen Lichtempfängers einen Winkel mit der Waferoberfläche einschließen, der nicht kleiner als der Winkel zwischen der Pyramidenkante jeden Wafers und der Waferoberfläche ist und vorzugsweise im Wesentlichen dem Winkel zwischen der Kante jeder Pyramide und der Waferoberfläche entspricht. Erfindungsgemäß ist die Messgeometrie also bewusst so gewählt, dass an den Pyramidenflächen, also den vier Seitenflächen der Pyramide, reflektiertes Licht nicht in den Lichtempfänger fällt. Durch diese bevorzugte Wahl des Beleuchtungswinkels, der nicht kleiner oder im Wesentlichen gleich dem Neigungswinkel der Pyramidenkanten ist, bei der die Beleuchtung dadurch senkrecht auf eine dieser vier Pyramidenkanten ausgerichtet ist, wird eine geometrische Abschattung des Lichts vermieden, das gemessen und zur Auswertung herangezogen werden soll. Dadurch liefert nur die beleuchtete Pyramidenkante ein rückreflektiertes Signal in den Empfänger, während die anderen drei Pyramidenkanten nicht beleuchtet werden und kein das Messergebnis störendes Signal liefern.

Aus den gemessenen Beugungsbildern ist es aufgrund der geringen Störbelastung der aufgenommenen gestreuten Beugungsbilder möglich, die mittlere Pyramidengröße, die statistische Verteilungsbreite der Pyramidengrößen innerhalb des beleuchteten Messflecks, sowie den mittleren Pyramidenwinkel zuverlässig zu bestimmen.

Auch in der zuvor genannten Ausführungsform der Erfindung, gemäß der das an der Oberfläche vorwärts gestreute Licht von einem gegebenenfalls weiteren Lichtempfänger zur Ermittlung des Bedeckungsgrads der Waferoberfläche mit Pyramiden ermittelt wird, ist die erfindungsgemäße Wahl eines Beleuchtungswinkels, der dem Neigungswinkel der Pyramidenkanten entspricht, äußerst vorteilhaft. Denn dadurch ergeben sich keine geometrischen Abschattungeffekte nicht texturierter Waferbereiche durch vorgelagerte Pyramiden, wodurch das Messergebnis beeinträchtigt werden würde.

Da der eingeschlossene Winkel der Pyramidenkanten zur Waferoberfläche üblicherweise 45° beträgt, ist es vorteilhaft, einen Einstrahlwinkel beziehungsweise eine Anordnung des Lichtempfängers in einem Winkel von 45° zur Waferoberfläche zu wählen.

Wie bereits erwähnt ist es also sehr vorteilhaft, als Beleuchtungswinkel den Neigungswinkel der Pyramidenkanten zu wählen und darüber hinaus den Beleuchtungswinkel senkrecht zu einer der Pyramidenkanten auszurichten.

In dieser vorteilhaften Geometrie gibt es bei der Messung des vorwärts gestreuten Lichts zur Ermittlung des Bedeckungsgrades mit Pyramiden keine verfälschende direkte Reflexion an einer Pyramidenkante oder Pyramidenfläche in den Empfänger und auch kein doppelt oder dreifach reflektiertes Licht, welches über zweimalige oder dreimalige Reflexion an Pyramidenflächen in den Empfänger gelangt. Es wird also ausschließlich Licht gemessen, welches von nicht mit Pyramiden bedeckten Flächenbereichen des Wafers stammt. Dies ist ein großer Vorteil gegenüber herkömmlichen Messgeometrien, bei denen der Wafer annähernd senkrecht von oben beleuchtet und das gestreute Licht gemessen wird. Bei einer solchen, senkrechten Geometrie misst man zu einem erheblichen Teil mehrfach reflektiertes Licht, welches an Pyramidenflächen reflektiert wird. Damit eignet sich die übliche, senkrechte Messgeometrie nicht für eine quantitative Bewertung der prozentualen Oberflächenbedeckung mit Pyramiden.

Sehr vorteilhaft ist eine Ausführungsform der Erfindung, wonach die Oberfläche des Wafers mit der Lichtquelle und dem Lichtempfänger abgefahren, und die Messergebnisse ortsaufgelöst über die Oberfläche des Wafers hinweg ermittelt werden. Zu diesem Zweck ist der Messfleck klein gewählt, beispielsweise mit einem Durchmesser von einem Millimeter.

Das erfindungsgemäße Verfahren wird mit Vorteil durchgeführt, wenn wenigstens eine schmalbandige Lichtquelle, vorzugsweise wenigstens ein Laser, eine Licht emittierende Diode (LED) oder eine Superluminiszenz-Diode (SLD) verwendet wird. Durch den Einsatz eines parallelen, engkollimierten, monochromatischen Laserstrahls oder einer entsprechenden Lichtquelle ist eine definierte Einstrahlung des Lichts und eine präzis auswertbare Winkelverteilung des zurückgebeugten und des vorwärtsgestreuten Lichts möglich. Durch eine enge Kollimation lassen sich Messungen an räumlich eng begrenzten Messorten durchführen und die Variation gemessener Parameter über den Wafer hinweg lassen sich durch zweidimensionales Abscannen der Waferoberfläche ermitteln.

Statt einer Lichtquelle, die ein eng kollimiertes, monochromatisches Licht aussendet, ist auch die Verwendung einer breitbandigen Lichtquelle, vorzugsweise einer Halogenlichtquelle möglich, bei der eine schmalbandige optische Bandpassfilterung oder eine spektrale Lichtzerlegung, beispielsweise mittels eines Spektrometers verwendet wird.

Vorzugsweise ist der wenigsten eine Lichtempfänger eine Digitalkamera, etwa eine Flächenkamera und/oder eine Zeilenkamera.

Das erfindungsgemäße Verfahren sowie dessen Vorteile wird bzw. werden nachfolgend anhand von Ausführungsbeispielen im Einzelnen erläutert. Es zeigen:
- Fig. 1: eine schematische Darstellung eines mit Pyramiden texturierten Solarwafers in Aufsicht unter Einstrahlung von Licht;
- Fig. 2: den in Fig. 1 dargestellten Solarwafer in Seitenansicht;
- Fig. 3: eine einzelne vergrößert dargestellte Pyramide in Aufsicht mit eingestrahltem Licht;
- Fig. 4: eine schematisch dargestellte Messanordnung zur Erläuterung der Lichtwege des gebeugten Lichts;
- Fig. 5: eine schematisch dargestellte Messanordnung zur Erläuterung der Lichtwege des an der Waferoberfläche gestreuten Lichts;
- Fig. 6: schematisch dargestellte Beugungsbilder am Einzelspalt für verschiedene einzelne Spaltgrößen und
- Fig. 7: Beugungsbilder bei inkoherenter Überlagerung der Beugungsbilder bei mehreren Spaltgrößen.

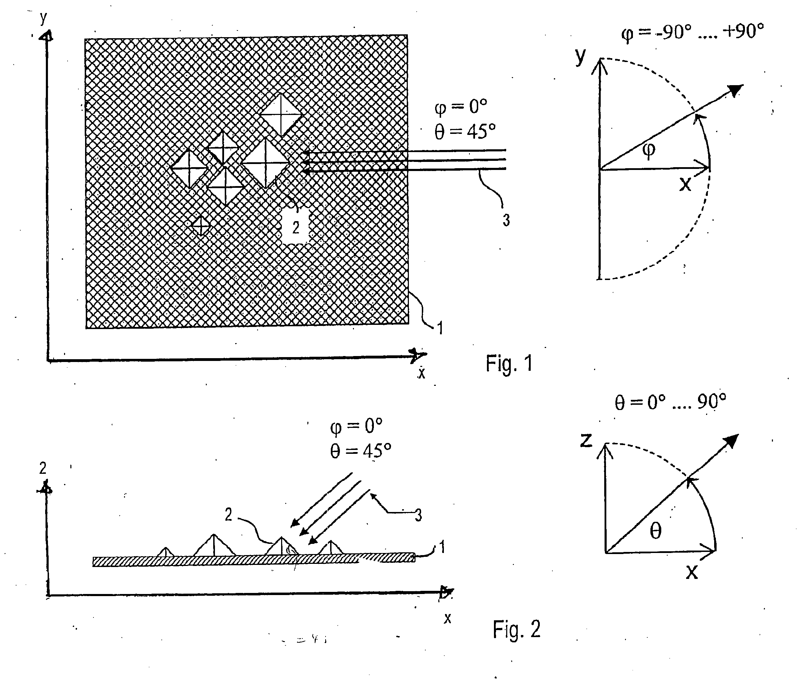

In Fig. 1 und 2 ist in Ansicht von oben bzw. im Querschnitt ein texturierter Siliziumwafer 1 gezeigt. Zur Veranschaulichung sind einige Pyramiden 2 in Übergröße auf dem Wafer 1 eingezeichnet. Bei den üblichen Texturierungsprozessen an monokristallinen Siliziumwafern ist die Pyramidenorientierung durch die Kristallachsen des in Hauptachsenrichtung gezogenen Mono-kristalls vorgegeben.

Für die nachfolgende Beschreibung am Beispiel quadratischer Wafer 1 werden folgende Koordinatensysteme verwendet, die in Fig.1 und 2 dargestellt sind, nämlich:
a) ein kartesisches Koordinatensystem: Die Aussenkanten des Wafers 1 zeigen in x- und y-Richtung. Die nach oben gerichtete Flächennormale des Wafers 1 zeigt in z-Richtung.
b) ein Kugelkoordinatensystem: Der Winkel θ ist der Polarwinkel und läuft von 0° bis +90°. θ = 0° gilt für alle Vektoren in der Waferebene, also der xy-Ebene bzw. für Vektoren mit z = 0. θ = 90° gilt für die Flächennormale des Wafers 1, also für Vektoren mit x = y = 0. Der Winkel ϕ ist der Azimutwinkel und läuft von -90° bis +90°. ϕ = 0° gilt für alle Vektoren in der x-z-Ebene, also Vektoren mit y = 0.

Definiert man bei den üblicherweise quadratischen Wafern ein Koordinatensystem so, dass die Aussenkanten in x- und y-Richtung zeigen und die nach oben gerichtete Flächennormale in z-Richtung, so werden der Monokristall und die Wafer üblicherweise bezüglich der Kristallachsen so gesägt, dass nach der Texturierung die vier Kanten jeder Pyramide 2 in x-z-Ebenen und in y-z-Ebenen liegen. Die vier Seiten der quadratischen Grundfläche jeder Pyramide 2 liegen also in einem Winkel von 45° zu den Aussenkanten des Wafers 1. Zwei Pyramidenkanten liegen somit in der x-z-Ebene. Betrachtet man alleine die x-z-Ebene, so zeigt der Normalenvektor von einer dieser beiden Kanten in positive x- und z-Richtung und schließt einen Winkel θ mit der Flächenormale des Wafers 1 ein. Der Pyramidenwinkel der Pyramidenflächen, d.h. der eingeschlossene Winkel mit dem Wafer 1 beträgt ca. 56°, und der eingeschlossene Winkel der Kanten mit dem Wafer 1 beträgt ca. θ = 45°. Für die Messung ist es daher vorteilhaft, mit Licht 3 einer Lichtquelle 4 in der x-z-Ebene unter einem Winkel θ von ca. 45° einzustrahlen und mit einem Lichtempfänger 5 das in der x-z-Ebene zurückgebeugte Licht aufzufangen und winkelaufgelöst auf den Detektor einer Zeilenkamera oder Flächenkamera abzubilden wie dies nachfolgend im Einzelnen beschriebene werden wird. Das Zentrum des Beugungsmusters, das von dem in der x-z-Ebene zurückgebeugten Licht erzeugt wird, liegt dabei ebenfalls in 45°-Richtung, nämlich in Richtung des Glanzreflexes an der Pyramidenkante in der x-z-Ebene.

Die Pyramiden 2 auf der texturierten Oberfläche haben aufgrund der Kristallstruktur des Mono-Kristalls alle die gleiche Orientierung und alle in etwa den gleichen Pyramidenwinkel. Dieser Winkel ergibt sich aus der Kristallstruktur von Silizium-Monokristallen. Abhängig vom Texturierungsprozess gibt es allerdings kleine Abweichungen von diesen theoretischen Werten. Die Pyramidenkanten haben typisch Kantenlängen zwischen 1 µm bis 10 µm.

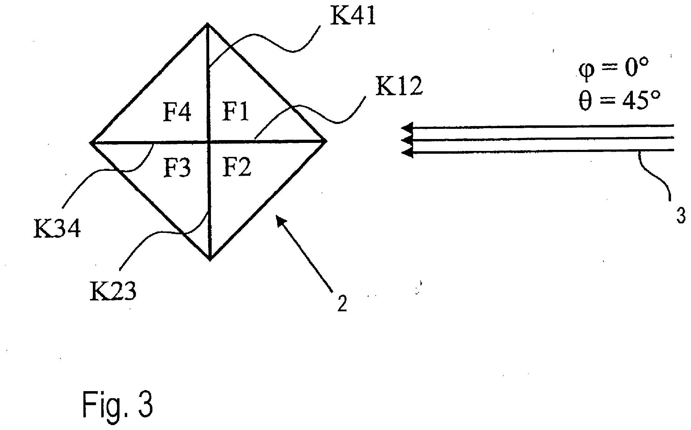

Wie in Fig. 3 dargestellt, hat jede Pyramide vier dreieckige Pyramidenflächen F1, F2, F3, F4 und vier Pyramidenkanten K12, K23, K34, K41. Strahlt man, wie in Fig. 3 gezeigt, mit parallelem, monochromatischem Licht auf die Pyramiden 2 und wählt die Einstrahlrichtung des Lichts 3 in der x-z-Ebene senkrecht zu einer der Pyramidenkanten, hier K12, also unter 45°, so bekommt man in der x-z-Ebene von jeder beleuchteten Pyramide 2 ein zurückreflektiertes Beugungsbild der Pyramidenkante K12 das dem Beugungsbild eines Spaltes dieser Länge entspricht. Vom Lichtstrahl werden viele Pyramiden 2 innerhalb eines beleuchteten Messflecks gleichzeitig beleuchtet. Die zurückreflektierten Beugungsbilder dieser Pyramiden überlagern sich inkohärent. Dies liefert insgesamt eine Winkelverteilung von zurückgebeugtem Licht, welches die inkohärente Überlagerung vieler Beugungsbilder der Pyramiden des beleuchteten Messflecks darstellt.

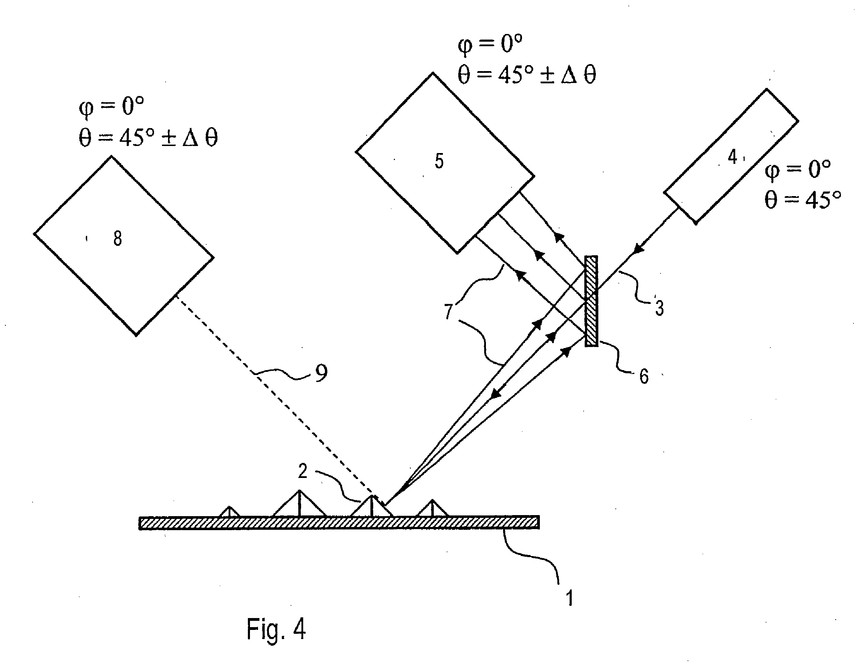

Fig. 4 zeigt eine vorteilhafte Messanordnung zur Messung der Pyramidengeometrie. Die optischen Achsen einer Lichtquelle 4 und eines Lichtempfängers 5 liegen in der x-z-Ebene. Der Wafer 1 ist mit den Aussenkanten parallel zur x-Achse und zur y-Achse angeordnet, so dass die in dieser Anordnung gemessenen Pyramidenkanten der Pyramiden 2 in der x-z-Ebene orientiert sind.

Die Pyramidenkanten schließen einen Winkel von ca. 45° mit dem Normalenvektor des Wafers, also der z-Achse, ein.

Die optischen Achsen der Lichtquelle 4 und des Lichtempfängers 5 haben ebenfalls einen Winkel von θ = 45° mit dem Normalenvektor des Wafers 1. Die Lichtquelle 4 sendet Licht 3 aus, welches nach Durchlaufen eine Strahlteilers 6 unter einem 45° Winkel auf den Wafer 1 trifft. Es trifft daher senkrecht auf die Pyramidenkanten. Das zurückgebeugte Licht 7 hat wiederum einen Zentralwinkel von θ = 45°. Dies ist auch die optische Achse des Lichtempfängers 5, welcher die Winkelverteilung des zurückgebeugten Lichts 7 nach Reflexion am Strahlteiler 6 empfängt und winkelaufgelöst misst. Der Lichtempfänger 5 misst also die Winkelverteilung der zurückgebeugten Lichtintensität in einem Winkelbereich θ ± Δθ, zentriert um den Winkel θ = 45°. Die Auswertung des Beugungsbildes liefert dann für die Pyramiden 2 innerhalb des beleuchteten Messflecks den Pyramidenwinkel, die mittlere Pyramidenhöhe und die Verteilungsbreite der Pyramidenhöhen.

Ein zweiter Lichtempfänger 8 für die Messung in Vorwärtsstreuung, ist ebenfalls schematisch dargestellt. Das auf die Pyramiden 2 auftreffende Licht gelangt nicht als Streulicht 9 zum Lichtempfänger 8. Aus der Sicht des Lichtempfängers 8 liegt das auf die Pyramidenflächen und die Pyramidenkante auftreffende Licht im geometrischen Schatten und ist daher nicht als Streulicht sichtbar.

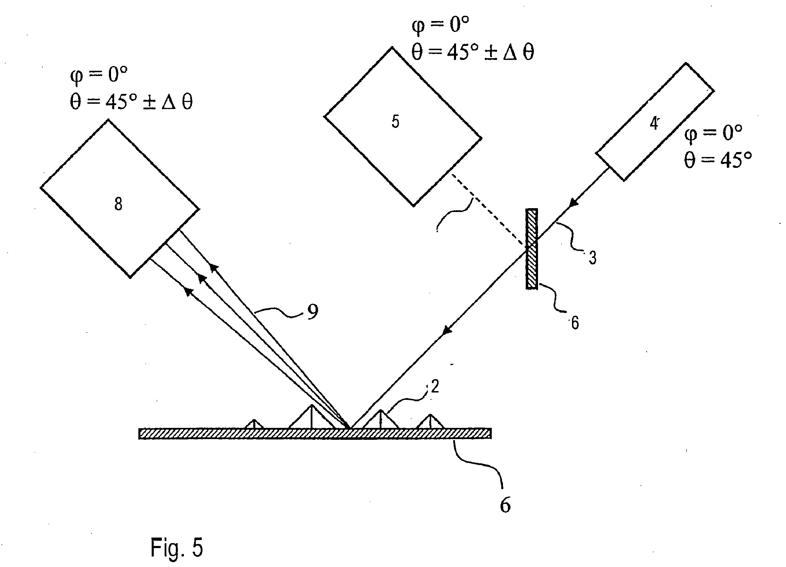

Fig. 5 zeigt dieselbe Messanordnung wie Fig. 4, jedoch ist hier beispielhaft der Strahlengang eingezeichnet, bei dem von der Lichtquelle 1 abgestrahltes Licht 3 auf einen nicht texturieren Bereich, also einen nicht mit Pyramiden 2 bedeckten Bereich des Wafers 1 trifft. Die Vorwärtsstreuung des Licht 3 in Richtung des Empfängers 8 ist sehr stark, wogegen die Rückwärtsstreuung in den Empfänger 5 vernachlässigbar gering ist. Der Winkel θ = 45° und ϕ = 0° ist ausserdem sehr vorteilhaft, weil es zu keiner geometrischen Abschattung der optischen Achsen kommt und Licht, welches an Pyramidenkanten oder Pyramidenflächen einfach oder mehrfach reflektiert oder gestreut wird, nicht auf den Lichtempfänger 8 trifft.

Für die Anordnung in Fig. 4 und Fig. 5 gilt, dass die Beleuchtung, jeweils unter θ = 45° in der x-z-Ebene erfolgt, und dass sowohl in Rückwärtsbeugung als auch in Vorwärtsstreuung die Winkelverteilung des Lichts gemessen wird, jeweils zentriert um den Winkel θ = 45°. Dies ist deshalb vorteilhaft, weil der Pyramidenkantenwinkel bei ca. 45° und damit auch das Zentrum der Rückwärtsbeugung und der Vorwärtsstreuung bei jeweils ca. 45° liegt. Dadurch ist das Zentrum dieser Winkelverteilungen auch ohne Abschattung durch vorgelagerte Pyramiden 2 sichtbar.

Ebenso sind für die Lichtempfänger alle Winkel >45° ohne Abschattung sichtbar. Für Winkel < 45° des rückwärts gebeugten bzw. des vorwärts gestreuten Lichts kommt es jedoch zu zunehmenden Abschattungseffekten durch vorgelagerte Pyramiden 2. Diese Abschattungseffekte nehmen zu, wenn der Winkel abnimmt. Daher ist die Winkelverteilung des von den Lichtempfängern gemessenen Lichts für Winkel < 45° durch Abschattung verfälscht. Die Verfälschung ist in der Nähe von 45° allerdings noch gering. Aufgrund dieser Verfälschung der Messungen durch Abschattungseffekte ist es vorteilhaft, nur die obere Hälfte der jeweils gemessenen Winkelverteilungen auszuwerten, die nicht durch Abschattungseffekte verfälscht ist.

Bei der in Fig. 4 und 5 dargestellten beispielhaften Anordnung, befinden sich die optischen Achsen, und die Orientierung der gemessenen Pyramidenkanten alle in einer Ebene, der x-z-Ebene. Es ist also der Winkel ϕ = 0. Die Winkelverteilung des zurückgebeugten Lichts in Richtung θ liegt aber nicht nur in der x-z-Ebene, sondern ist in Richtung ϕ sehr weit ausgedehnt. Dies liegt daran, dass die Beugung an scharfen Kanten erfolgt, die in y-Richtung eine sehr geringe Ausdehnung von wenigen Nanometern haben. Diese Ausdehnung ist deutlich kleiner als die Wellenlänge des verwendeten Lichts. Daher ergibt sich auch in y-Richtung ein Beugungsbild, welches gleichmäßig den kompletten Winkelbereich von ϕ = +90° bis ϕ = -90 abdeckt und mindestens in einem Bereich von ϕ = +10 bis ϕ = -10° nahezu konstant ist. Das von den Pyramiden zurückgebeugte Licht bildet daher ein breites Lichtband, welches in ϕ-Richtung sehr gleichmäßig und breit ausgedehnt ist und in θ-Richtung ein schmales Beugungsbild zeigt, nämlich das Beugungsbild eines Spaltes bzw. die inkohärente Überlagerung der Beugungsbilder vieler Spalte (im hier vorliegenden Fall sind die "Spalte" die Pyramidenkanten). Dabei ist immer die untere Hälfte des Beugungsbildes durch Abschattung an den Pyramiden 2 verfälscht.

Aus dem Gesagten wird deutlich, dass die optischen Achsen von Lichtquelle 4 und Lichtempfänger 5 für die Messung des zurückgebeugten Lichts 7 nicht notwendigerweise in der x-z-Ebene liegen müssen. Sie können unproblematisch und ohne Verfälschung der Messergebnisse in y-Richtung (bzw. in ϕ-Richtung) voneinander getrennt werden. Die Auftrennung kann sogar unsymmetrisch erfolgen. Lediglich eine Auftrennung von mehr als 10° sollte vermieden werden, weil sonst durch Abschattungseffekte an den Pyramiden 2 zunehmende Verfälschungen der Messungen auftreten könnten.

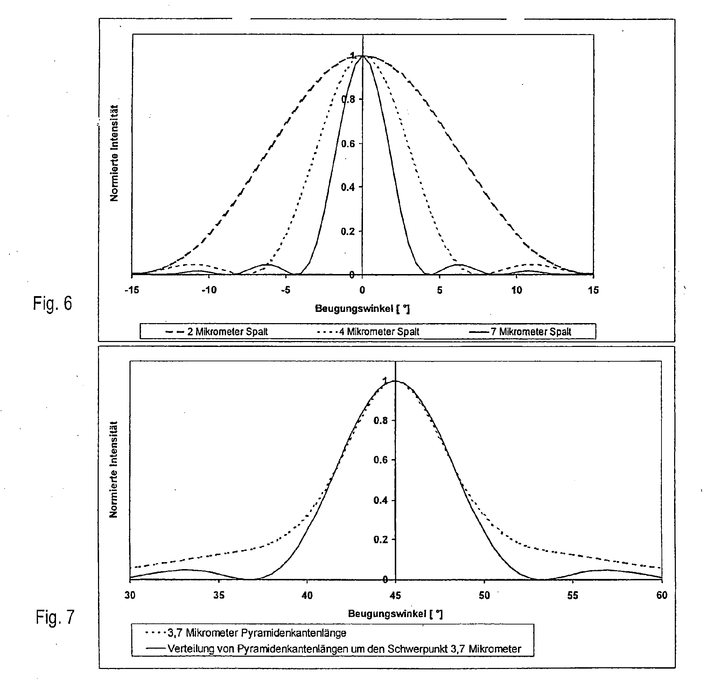

Fig. 6 zeigt die theoretische, normierte Intensitäts- bzw. Winkelverteilung für die Beugung am Spalt bzw. an den Kanten der Pyramiden 2, dargestellt für die Spaltgrößen 2 µm , 4 µm und 7 µm. Als Lichtquelle 4 ist hier ein Laser mit der Wellenlänge 632nm angenommen.

Fig. 7 stellt gegenüber, wie sich das Beugungsbild eines Spaltes bzw. einer Kante in Rückstreuung verändert, wenn statt Pyramiden 2 identischer Höhe eine Verteilungsbreite unterschiedlicher Pyramidenhöhen vorliegt, die aber dieselben durchschnittlichen Pyramidenhöhen haben. Man sieht, dass die Halbwertsbreite der Winkelverteilung charakteristisch für die mittlere Pyramidenhöhe ist, wogegen die Minima der Kurven, welche bei Pyramiden identischer Höhe bei 0 liegen, sich mit zunehmender Verteilungsbreite charakteris tisch anheben. Daher lassen sich aus dem gemessenen Beugungsbild sowohl die mittlere Pyramidenhöhe, als auch die Verteilungsbreite der Pyramidenhöhen ermitteln. Dafür eignen sich verschiedenste mathematische Algorithmen.

Abhängig vom Pyramidenwinkel ändert sich außerdem das Symmetriezentrum der Winkelverteilung des Beugungsbildes. Das Symmetriezentrum des Beugungsbildes ist das Intensitätsmaximum der winkelabhängigen Intensität. Die Position des Intensitätsmaximums ergibt sich aus dem geometrischen Glanzreflex des eingestrahlten Lichts 3 an der Pyramidenkante. Bei einer Einstrahlrichtung von 45° liegt das Maximum des Beugungsbildes z.B. bei 46°, wenn der Pyramidenkantenwinkel 44° beträgt, oder bei 47°, wenn der Pyramidenkantenwinkel 43° beträgt. Aus der Lage des Intensitätsmaximums lässt sich also direkt der Pyramidenkantenwinkel und damit auch der Pyramidenwinkel der Seitenflächen der Pyramiden ablesen.

Fig. 7 zeigt also das theoretische Beugungsbild in Reflexion von einer scharfen Linie, der Pyramidenkante der Länge 3,7 µm, zentriert um den Winkel 45°, sowie das Beugungsbild einer Verteilungsbreite von scharfen Linien unterschiedlicher Länge mit einer Durchschnittslänge von 3,7 µm. Hier sind die Positionen der Minima nicht mehr ausgeprägt und heben sich mit Zunahme der Verteilungsbreite an. In diesem theoretischen Beugungsbild ist die Asymmetrie des Beugungsbildes, welche sich für Winkel < 45 durch Abschattungseffekte an den Pyramiden 2 ergeben, nicht dargestellt.

Das Standardverfahren zur Texturierung monokristalliner Solarzellen ist die alkalische Ätzung in Nassbädern. Bei diesem Ätzverfahren bilden sich durch die unterschiedlichen Ätzgeschwindigkeiten relativ zur (1,0,0)-Orientierung des Siliziumkristalls Pyramiden 2 einheitlicher Orientierung, aber unterschiedlicher Größe auf der Oberfläche des Wafers 1 aus. Diese Pyramiden 2 führen zu einer sehr effektiven Reduzierung der Verluste, die durch Reflexion von Sonnenlicht an der Solarzelle auftreten.

Für eine optimale Effizienz der Solarzellen sind die geometrischen Parameter der Pyramiden 2 und die Bedeckungsdichte der Waferoberfläche mit Pyramiden 2 wichtig. Diese Textureigenschaften hängen von vielen Prozessparametern ab, unter anderem von der chemischen Zusammensetzung des Ätzbades, den Badzeiten, der Vorbehandlung der Wafer 1, dem Sägeprozess der Wafer 1, dem Siliziumrohmaterial und der Alterung des Ätzbades. Außerdem kann die Textur inhomogen über die Waferoberfläche sein, weshalb ein schnelles scannendes Messverfahren vorteilhaft ist. Hierfür sind bislang nur unzureichende Messverfahren vorhanden, die eine schnelle Prozesskontrolle ermöglichen könnten. Das vorliegende, erfindungsgemäße Verfahren schließt diese Lücke.

## Patentansprüche

1. Verfahren zum optischen Vermessen von Pyramiden (2) auf oberflächentexturierten, monokristallinen Siliziumwafern, unter Verwendung wenigstens einer Lichtquelle (4) und eines ersten Lichtempfängers (5), wobei zwei gegenüberliegende Kanten jeder Pyramide in einer x-z-Ebene liegen, die optische Achse der Lichtquelle (4) winkelmäßig höchstens 10° von der x-z-Ebene abweicht, vom ersten Lichtempfänger (5) eine Winkelverteilung einer Intensität von an den Kanten der Pyramiden (2) zurückgebeugtem Licht (7) in Form eines Beugungsbilds aufgenommen wird und das Beugungsbild mittels der Theorie der Beugung am Spalt zur Ermittlung geometrischer Eigenschaften der Pyramiden (2) ausgewertet wird.

2. Verfahren nach Anspruch 1, wobei ein Messfleck des von der Lichtquelle (4) emittieren Lichts die Oberfläche des Wafers (1) beleuchtet, ein zweiter Lichtempfänger (8) das an der Oberfläche vorwärts gestreute Licht (9) aufnimmt, und der Bedeckungsgrad der Oberfläche mit Pyramiden (2) aus der ermittelten Lichtmenge ermittelt wird.

3. Verfahren nach Anspruch 2, wobei die optischen Achsen der wenigstens einen Lichtquelle (4) und des ersten und zweiten Lichtempfängers (5, 8) mit der Flächennormalen der Waferoberfläche im Wesentlichen in einer Ebene liegen.

4. Verfahren nach einem der vorhergehenden Ansprüche, wobei die optische Achse des ersten bzw. zweiten Lichtempfängers (5 bzw. 8) winkelmäßig höchstens 10° von der x-z-Ebene abweicht.

5. Verfahren nach einem der vorhergehenden Ansprüche, wobei die optische Achse der Lichtquelle (4) und/oder die optische Achse des ersten und/oder des zweiten Lichtempfängers (5 bzw. 8) einen Winkel zur Waferoberfläche einschließt, der nicht kleiner als der Winkel zwischen der Pyramidenkante und der Waferoberfläche ist und vorzugsweise im Wesentlichen dem Winkel zwischen der Pyramidenkante und der Waferoberfläche entspricht.

6. Verfahren nach einem der vorhergehenden Ansprüche, wobei die Oberfläche des Wafers (1) mit der wenigstens einen Lichtquelle (4) und dem ersten (5) bzw. dem ersten und zweiten Lichtempfänger (5, 8) abgefahren wird, und die Lichtaufnahme über die Waferoberfläche hinweg erfolgt.

7. Verfahren nach einem der vorhergehenden Ansprüche, wobei als die wenigstens eine Lichtquelle (4) eine schmalbandige Lichtquelle, vorzugsweise wenigstens ein Laser, eine lichtemittierende Diode oder eine Superluminiszenz-Diode verwendet wird.

8. Verfahren nach einem der Ansprüche 1 bis 6, wobei als die wenigstens eine Lichtquelle (4) eine breitbandige Lichtquelle, vorzugsweise eine Halogenlichtquelle, mit einer nachfolgenden schmalbandigen optischen Bandpassfilterung oder mit einer nachfolgenden spektralen Lichtzerlegung, vorzugsweise mittels eines Spektrometers, verwendet wird.

9. Verfahren nach einem der vorhergehenden Ansprüche, wobei als erster Lichtempfänger (5) und/oder als zweiter Lichtempfänger (8) eine Digitalkamera, vorzugsweise eine Flächenkamera und/oder einen Zeilenkamera, verwendet wird bzw. werden.

## Claims

1. A method for the optical measurement of pyramids (2) on surface textured monocrystalline silicon wafers using at least one light source (4) and a first light receiver (5), wherein two opposite edges of each pyramid lie in a x-z-plane, the optical axis of the light source (4) deviates angularly at most 10° from the x-y-plane, an angular distribution of an intensity of the light (7) reflected from the edges of the pyramids (2) in form of a diffraction picture is received by the light receiver (5), and the diffraction picture is evaluated by means of the diffraction theory at a slit for the purposes of determining geometrical properties of the pyramids (2).

2. A method according to Claim 1, wherein a measuring spot of the light emitted by the light source (4) illuminates the surface of the wafer (1), a second light receiver (8) collects the light (9) scattered forwardly at the surface, and the degree of coverage of the surface with pyramids (2) is determined from the detected quantity of light.

3. A method according to claim 2, wherein the optical axis of the at least one light source (4) and the optical axis of the first and second light receiver (5 or 8) lie substantially in a plane with the surface-normal of the wafer surface.

4. A method according to any of the preceding claims, wherein the optical axis of the first and second light receiver (5 or 8), respectively deviates angularly at most 10° from the x-y-plane.

5. A method according to any of the preceding claims, wherein the optical axis of the light source (4) and/or the optical axis of the first and/or second light receiver (5 or 8) includes an angle with respect to the wafer surface which is not smaller than the angle between the pyramid edge and the wafer surface and preferably corresponds substantially to the angle between the pyramid edge and the wafer surface.

6. A method according to any of the preceding claims, wherein the surface of the wafer (1) is traversed by the at least one light source (4) and the first (5) and second light receiver (5, 8), respectively, and the light collection process takes place over the entire wafer surface.

7. A method according to any of the preceding claims, wherein a narrow-band light source, preferably at least one laser, a light emitting diode or a superluminescent diode is used as the at least one light source (4).

8. A method according to any of the Claims 1 to 6, wherein as a wide-band light source , preferably a halogen light source with a following narrow-band optical band-pass filter or with a following spectral light splitter, preferably by means of a spectrometer, is used as the at least one light source (4).

9. A method according to any of the preceding claims, wherein a digital camera, preferably a surface camera and/or a line camera, is used as the light receiver (5) and/or as the second light receiver (8).

## Revendications

1. Procédé de mesure optique de pyramides (2) sur des plaquettes de silicium monocristallin texturées en surface, en utilisant au moins une source de lumière (4) et un premier récepteur de lumière (5), dans lequel deux arêtes opposées de chaque pyramide sont situées dans un plan x-z, l'axe optique de la source de lumière (4) s'écarte angulairement de 10° au maximum du plan x-z, une répartition angulaire d'une intensité de lumière (7) diffractée en retour sur les arêtes des pyramides (2) est enregistrée par le premier récepteur de lumière (5) sous la forme d'une image de diffraction et l'image de diffraction est évaluée au moyen de la théorie de la diffraction sur la fente pour déterminer des propriétés géométriques des pyramides (2).

2. Procédé selon la revendication 1, dans lequel un spot de mesure de la lumière émise par la source de lumière (4) éclaire la surface de la plaquette (1), un deuxième récepteur de lumière (8) capte la lumière (9) diffusée vers l'avant sur la surface, et le degré de couverture de la surface par des pyramides (2) est déterminé à partir de la quantité de lumière déterminée.

3. Procédé selon la revendication 2, dans lequel les axes optiques de ladite au moins une source de lumière (4) et desdits premier et deuxième récepteurs de lumière (5, 8) sont sensiblement dans un plan avec la normale à la surface de la tranche.

4. Procédé selon l'une des revendications précédentes, dans lequel l'axe optique du premier ou du deuxième récepteur de lumière (5 ou 8) s'écarte angulairement d'au plus 10° du plan x-z.

5. Procédé selon l'une des revendications précédentes, dans lequel l'axe optique de la source de lumière (4) et/ou l'axe optique du premier et/ou du deuxième récepteur de lumière (5 ou 8) forme un angle par rapport à la surface de la plaquette qui n'est pas inférieur à l'angle entre le bord de la pyramide et la surface de la plaquette et qui correspond de préférence sensiblement à l'angle entre le bord de la pyramide et la surface de la plaquette.

6. Procédé selon l'une des revendications précédentes, dans lequel la surface de la plaquette (1) est parcourue avec la au moins une source de lumière (4) et le premier (5) ou le premier et le deuxième récepteur de lumière (5, 8), et la réception de la lumière s'effectue sur la surface de la plaquette.

7. Procédé selon l'une des revendications précédentes, dans lequel de préférence au moins un laser, une diode électroluminescente ou une diode super luminescente est utilisé comme l'au moins une source de lumière (4) à bande étroite.

8. Procédé selon l'une quelconque des revendications 1 à 6, dans lequel comme ladite au moins une source de lumière (4) de préférence une source de lumière halogène est utilisée avec un filtrage optique passebande à bande étroite subséquent ou avec une décomposition spectrale subséquente de la lumière, de préférence en utilisant un spectromètre.

9. Procédé selon l'une des revendications précédentes, dans lequel comme premier récepteur de lumière (5) et/ou comme deuxième récepteur de lumière (8) une caméra numérique, de préférence une caméra matricielle et/ou une caméra linéaire, est ou sont utilisée(s).
